(19) Europäisches Patentamt
European Patent Office
Office européen des brevets

(11) **EP 1 769 882 B1**

(12) **EUROPEAN PATENT SPECIFICATION**

(45) Date of publication and mention
of the grant of the patent:
**16.04.2008 Bulletin 2008/16**

(51) Int Cl.:
*B23K 35/368* (2006.01)      *B23K 35/36* (2006.01)
*B23K 35/02* (2006.01)

(21) Application number: **06016642.8**

(22) Date of filing: **09.08.2006**

(54) **Flux-cored wire for gas shielded arc welding**

Seelendraht zum Schutzgaslichtbogenschweissen

Fil fourré pour le soudage à l'arc sous gaz de protection

(84) Designated Contracting States:
**GB NL SE**

(30) Priority: **28.09.2005 JP 2005281695**

(43) Date of publication of application:
**04.04.2007 Bulletin 2007/14**

(73) Proprietor: **KABUSHIKI KAISHA KOBE SEIKO SHO**
**Kobe-shi,**
**Hyogo 651-8585 (JP)**

(72) Inventors:
• **Takauchi, Hideaki**
**Fujisawa Plant in Kobe Steel Ltd**
**Fujisawa-shi,**
**Kanagawa 251-0014 (JP)**
• **Hidaka, Takeshi**
**Fujisawa Plant in Kobe Steel Ltd**
**Fujisawa-shi,**
**Kanagawa 251-0014 (JP)**
• **Suenaga, Kazuyuki**
**Fujisawa Plant in Kobe Steel Ltd**
**Fujisawa-shi,**
**Kanagawa 251-0014 (JP)**

• **Ikeda, Tetsunao**
**Fujisawa Plant in Kobe Steel Ltd.**
**Fujisawa-shi,**
**Kanagawa 251-0014 (JP)**
• **Takahashi, Tetsuo**
**Fujisawa Plant in Kobe Steel Ltd.**
**Fujisawa-shi,**
**Kanagawa 251-0014 (JP)**

(74) Representative: **Müller-Boré & Partner**
**Patentanwälte**
**Grafinger Strasse 2**
**81671 München (DE)**

(56) References cited:
EP-A- 0 595 337          EP-A- 1 712 327
JP-A- 2002 224 883       US-A- 5 055 655
US-A- 5 091 628          US-A- 5 132 514

• DATABASE WPI Section Ch, Week 197716
Derwent Publications Ltd., London, GB; Class A,
page 97, AN 1977-27962Y XP002410989 -& JP 52
030736 A (KOBE STEEL LTD) 8 March 1977
(1977-03-08)
• DATABASE WPI Section Ch, Week 197922
Derwent Publications Ltd., London, GB; Class A,
page 97, AN 1979-41932B XP002410990 -& SU 617
216 A (DEMYANTSEVICH V P) 6 July 1978
(1978-07-06)

**Description**

The present invention relates to a flux-cored wire for gas shielded arc welding which allows delayed cracking to be hardly generated after welding by: making flux particles hardly adherable to water molecules and thus hardly hygroscopic; reducing hydrogen intruding into a weld metal; and thus reducing diffusible hydrogen.

There has heretofore been the problem in that hydrogen atoms are trapped into a weld metal due to the moisture absorption of a welding material and the hydrogen embrittlement of a weld is caused. To cope with the problem, the reduction of adherent water by the incineration of a welding material at a high temperature has been attempted and a wire of a seamless structure as a flux-cored welding wire has been put into practical use with the aim of making a welding material hardly hygroscopic. However, the problem here is that the production cost of a wire of a seamless structure is high.

To solve the problem, with regard to a seamed wire too, various kinds of technologies are proposed with the aim of making a welding material hardly hygroscopic and reducing diffusible hydrogen.

Firstly as a technology on a flux-cored arc electrode, JP-B No. 110432/1995 (EP-A-595337) proposes an arc electrode wherein an arc stabilizer, titanium dioxide, calcium fluoride, alloy of aluminum or the like, iron, and polytetrafluoroethylene (PTFE) powder are blended in flux.

Further, JP-A No. 224883/2002 proposes an arc electrode wherein resistance to hygroscopicity is improved and thus welding operability is also improved by: blending resin powder with flux; filling a structural casing with them; subjecting the entire wire to wire drawing; and thus producing a flux-cored wire.

However, in the case of the technology described in JP-B No. 110432/1995, although PTFE powder is blended in flux with the aim of reducing diffusible hydrogen, the problems of the technology are that the resistance to hygroscopicity is not improved and the welding operability deteriorates due to the blending of the PTFE powder.

Further, in the case of the conventional technology described in JP-A No. 224883/2002, although the resistance to hygroscopicity of a wire is improved by blending resin powder with flux, the issue of the reduction of diffusible hydrogen is not taken into consideration at all. In addition, although the amount of generated spatter is suppressed to the utmost by reducing the amount of the blended resin powder required for the improvement of the resistance to hygroscopicity as much as possible, the problems here are that it is difficult to simultaneously achieve both the improvement of the resistance to hygroscopicity and the suppression of the amount of generated spatter, and thus the welding operability such as arc stability and the like is poor.

The present invention has been established in view of the above problems and an object thereof is to provide a flux-cored wire for gas shielded arc welding which: can prevent diffusible hydrogen from intruding into a weld at arc welding; is excellent in the resistance to hygroscopicity of the wire; and exhibits far better welding operability.

A flux-cored wire for gas shielded arc welding according to an aspect of the present invention is a flux-cored wire for gas shielded arc welding formed by filling a steel casing with flux, wherein: the flux contains, by mass percentage to the total mass of the wire, titanium dioxide: 4.0 to 8.0%, alkali metal fluoride (fluorine equivalence): 0.02 to 0.40%, and polytetrafluoroethylene (fluorine equivalence): 0.02 to 0.40%; the fluorine equivalence of alkali-earth metal fluoride in said flux is regulated to 0.01% or less by mass to the total mass of wire; and the fluorine equivalence of alkali metal fluoride and the fluorine equivalence of polytetrafluoroethylene satisfy the following expressions 1 and 2;

[Expression 1]

(fluorine equivalence of alkali metal fluoride)/( fluorine

equivalence of polytetrafluoroethylene) ≤ 1,

and

[Expression 2]

(fluorine equivalence of alkali metal fluoride + 0.35)/(fluorine equivalence of polytetrafluoroethylene) ≥ 1.

The term "fluorine equivalence" cited here means the content of the mass of the fluorine part constituting a relevant material. For example, in the case of NaF, since F/NaF = 19/(23 + 19) = 0.4523, the fluorine equivalence of NaF is the value obtained by multiplying the content of NaF by the coefficient 0.4523.

In the flux-cored wire for gas shielded arc welding, it is preferable that at least one of the steel casing and the flux contains C: 0.007 to 0.15% by mass percentage to the total mass of the wire.

It is yet preferable that the C content is in the range of 0.01 to 0.12% by mass percentage to the total mass of the wire.

The present invention makes it possible to: reduce diffusible hydrogen in a weld metal; make a flux-cored wire hardly hygroscopic; and obtain good welding operability. As a consequence, it is possible to: carry out welding under a good welding operation environment; improve the resistance to hygroscopicity of a flux-cored welding wire; attempt to reduce diffusible hydrogen; hence prevent the hydrogen embrittlement of a weld; and further enhance the safety of a structure.

Embodiments of the present invention will be described in detail based on the following figures, wherein:

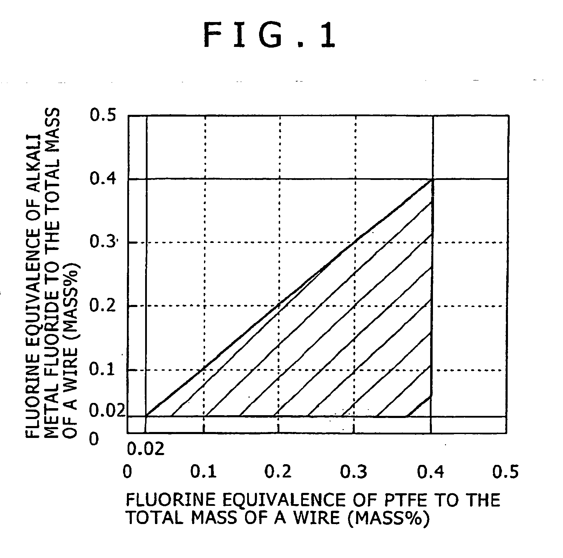

Fig. 1 is a graph showing the region stipulated in the present invention with hatching, wherein the fluorine equivalence of PTFE by mass percentage to the total mass of a wire is shown along the horizontal line and the fluorine equivalence of alkali metal fluoride by mass percentage to the total mass of a wire is shown along the vertical line.

The present inventors repeated research through various experiments in order to solve the problems imposed on the present invention; and as a result have found that, in a flux-cored wire for gas shielded welding, by blending polytetrafluoroethylene (PTFE) and alkali metal fluoride in appropriate amounts, it is possible to reduce diffusible hydrogen, improve the resistance to hygroscopicity of the wire, and realize the improvement of welding operability while allowing all position welding. The present invention has been established on the basis of the above findings.

That is, by blending PTFE with flux, the PTFE having water repellency softens by the heat and pressure during wire drawing and covers the surfaces of flux particles; thereby the water absorption from the flux surfaces reduces; and resultantly very good resistance to hygroscopicity is obtained. In addition, the PTFE dissociates by the arc heat during arc welding, hydrogen fluoride is generated at the time, the hydrogen fluoride scatters in the air and thereafter decomposes into fluorine and hydrogen, thereby hydrogen is prevented from intruding into a weld metal, and diffusible hydrogen can be reduced.

However, by blending PTFE in flux, the welding operability deteriorates considerably. Therefore, a means of reducing the amount of PTFE and thus suppressing the deterioration of the welding operability can be considered in order to secure the welding operability. However, with the reduction of the PTFE amount, the effects of PTFE, namely the effects in the reduction of the diffusible hydrogen amount and the improvement of resistance to hygroscopicity, weaken. Nevertheless, the present inventors have found that the welding operability improves by blending alkali metal fluoride in an appropriate amount. Consequently, the present invention is characterized in that all the improvement of welding operability, the reduction of diffusible hydrogen, and the improvement of resistance to hygroscopicity can be obtained by blending alkali metal fluoride in an appropriate amount together with the blend of a sufficient amount of PTFE.

The reasons for limiting the values related to a flux-cored wire for gas shielded arc welding according to the present invention are hereunder explained. Firstly, the composition of flux is explained. Note that the composition of flux is represented by the percentage of a mass (% by mass) to the total mass of a wire.

Titanium dioxide: 4.0 to 8.0% by mass

Titanium dioxide is the main component of titania type flux. The titanium dioxide is a component functioning as a slag former and an arc stabilizer and, by blending an appropriate amount of it, it is possible to apply all position welding. Consequently, a wire according to the present invention contains titanium dioxide by 4.0 to 8.0% by mass percentage to the total mass of the wire. When a content of titanium dioxide is less than 4.0% by mass, all position welding cannot be applied. On the other hand, when a content of titanium dioxide exceeds 8.0% by mass, the effects of improving resistance to hygroscopicity and reducing diffusible hydrogen cannot be obtained due to the moisture absorption of the titanium dioxide. For those reasons, the content of titanium dioxide is set at 4.0 to 8.0% by mass, and preferably 4.5 to 7.5% by mass. As a raw material of titanium dioxide, rutile, reduced ilminite, or the like may be used.

Alkali metal fluoride: 0.02 to 0.40% by mass of fluorine equivalence

By blending alkali metal fluoride in flux, the alkali metal fluoride functions as an arc stabilizer, suppresses the deterioration of welding operability caused by PTFE, functions as a source of fluorine, and has an effect of reducing diffusible hydrogen. When the fluorine equivalence of alkali metal fluoride is less than 0.02% by mass percentage to the total mass of a wire, the effect of improving welding operability cannot be expected. When the fluorine equivalence of alkali metal fluoride exceeds 0.40% by mass, since alkali metal fluoride tends to absorb moisture, the effects of improving resistance to hygroscopicity and reducing diffusible hydrogen with PTFE cannot be obtained. The most appropriate content of alkali metal fluoride is 0.03 to 0.30% by mass of fluorine equivalence and hence a content of alkali metal fluoride is set at 0.02 to 0.40% by mass of fluorine equivalence.

PTFE: 0.02 to 0.40% by mass of fluorine equivalence

By blending PTFE in flux, the PTFE having water repellency softens due to the heat and pressure during wire drawing, covers the surfaces of flux particles, thereby reduces moisture absorption from the flux surface, and makes resistance to hygroscopicity very good. In addition, the PTFE dissociates due to arc heat during arc welding, reacts with hydrogen in arc, and generates hydrogen fluoride (HF). Consequently the amount of hydrogen in arc reduces and resultantly the hydrogen intruding into a weld metal reduces. When the blended amount of the fluorine equivalence of PTFE is less than 0.02% by mass percentage to the total mass of a wire, the effects of reducing diffusible hydrogen and improving resistance to hygroscopicity cannot be obtained. When a PTFE amount of fluorine equivalence exceeds 0.40% by mass, welding operability deteriorates conspicuously. For those reasons, a content of PTFE is set at 0.02 to 0.40% by mass of fluorine equivalence. A preferable content of PTFE is in the range of 0.05 to 0.30% by mass of fluorine equivalence. Further, from the viewpoint of securing the fluidity of flux during the production of a flux-cored wire, a preferable particle size of PTFE is in the range of 0.01 to 400 $\mu$m in the process of filling a steel casing with flux (namely at a stage before wire drawing).

Alkali-earth metal fluoride: 0.01% or less by mass of fluorine equivalence

When alkali-earth metal fluoride is blended in flux, welding operability deteriorates and further resistance to hygroscopicity also deteriorates. When the fluorine equivalence of alkali-earth metal fluoride exceeds 0.01% by mass percentage to the total mass of a wire, welding operability and resistance to hygroscopicity deteriorate conspicuously and hence it is necessary to regulate alkali-earth metal fluoride to 0.01% or less by mass of fluorine equivalence.

In general, when fluoride is added to the flux of a flux-cored wire, alkali metal fluoride and alkali-earth metal fluoride are used often. However, in the present invention, we should endeavor not to use alkali-earth metal fluoride.

Relationship between PTFE and alkali metal fluoride

Although the effects of reducing diffusible hydrogen and improving resistance to hygroscopicity are obtained by blending PTFE in flux, welding operability deteriorates conspicuously when PTFE is added alone. To cope with that in the present invention, welding operability is prevented from deteriorating by simultaneously blending alkali metal fluoride as an arc stabilizer. In the case, when the ratio (fluorine equivalence of alkali metal fluoride by mass percentage to the total mass of a wire)/(fluorine equivalence of PTFE) exceeds one, the influence of the excessive alkali metal fluoride on the deterioration of resistance to hygroscopicity is more substantial than the effects of reducing diffusible hydrogen and improving resistance to hygroscopicity with PTFE and the effects of reducing diffusible hydrogen and improving resistance to hygroscopicity with PTFE are hindered. Further, when the ratio (fluorine equivalence of alkali metal fluoride + 0.35)/(fluorine equivalence of PTFE) is less than one, the influence of PTFE on the deterioration of welding operability appears more conspicuously than the effect of improving welding operability with alkali metal fluoride, the effect of improving welding operability by containing alkali metal fluoride is not obtained, and hence the aforementioned ratio has to be one or more.

For those reasons, an appropriate amount of alkali metal fluoride is necessary in accordance with the amount of PTFE, and PTFE and alkali metal fluoride are required to satisfy the following expressions 3 and 4;

[Expression 3]

(fluorine equivalence of alkali metal fluoride)/( fluorine equivalence of polytetrafluoroethylene) ≤ 1,

[Expression 4]

(fluorine equivalence of alkali metal fluoride + 0.35)/(fluorine equivalence of polytetrafluoroethylene) ≥ 1.

The region wherein the expressions 3 and 4 are satisfied is shown with hatching in Fig. 1. In Fig. 1, a content of PTFE (fluorine equivalence by mass percentage to the total mass of a wire) is shown along the horizontal line and a content of alkali metal fluoride (fluorine equivalence by mass percentage to the total mass of a wire) is shown along the vertical line, and the region wherein the fluorine equivalence of PTFE falls within the range of 0.02 to 0.40% by mass and the fluorine equivalence of alkali metal fluoride falls within the range of 0.02 to 0.40% by mass and simultaneously the expressions 3 and 4 are satisfied is shown with the hatching.

It is preferable that PTFE and alkali metal fluoride satisfy the following expressions 5 and 6;

[Expression 5]

(fluorine equivalence of alkali metal fluoride)/( fluorine

equivalence of polytetrafluoroethylene) ≤ 0.8,

[Expression 6]

(fluorine equivalence of alkali metal fluoride + 0.35)/(fluorine equivalence of polytetrafluoroethylene) ≥

1.2.

Next, other components in a flux-cored wire for gas shielded arc welding according to the present invention are explained.

C: 0.007 to 0.15% by mass, preferably 0.01 to 0.12% by mass, yet preferably 0.03 to 0.10% by mass

By adding an appropriate amount of C, the toughness of a weld metal can be stabilized. The lower limit of the addition amount of PTFE is 0.02% by mass percentage of fluorine equivalence to the total mass of a wire and, in this case, the C content in the PTFE is about 0.006% by mass. Hence, at least C of 0.006% by mass is contained in a wire. Further, since a steel casing and others contain C, actual C content in a wire is 0.007% or more by mass percentage to the total mass of the wire.

In this case, when a C content exceeds 0.15% by mass, arc stability at welding deteriorates, current fluctuation increases, and high temperature cracking is likely to occur during welding. For that reason, a C content is set at 0.15% or less by mass.

As stated above, by increasing a PTFE content, the effects of reducing diffusible hydrogen and improving resistance to hygroscopicity are further exhibited. Assuming that the PTFE content is 0.05% or more by mass (fluorine equivalence) which is in a preferable range of PTFE in this case, the C content therein is 0.01% or more by mass. In other words, in order to further exhibit the effects of reducing diffusible hydrogen and improving resistance to hygroscopicity with PTFE, a required C content is 0.01% or more by mass. In this case, the effect of stabilizing the toughness of a weld with C can also be obtained.

By suppressing a C content to 0.12% by mass, not only PTFE can be added sufficiently but also the influence of C addition on the deterioration of welding operability is small and high temperature cracking tends to hardly occur during welding. For those reasons, a C content is preferably 0.01 to 0.12% by mass, and yet preferably 0.03 to 0.10% by mass.

Here, in the present invention, C may be added not only to flux as PTFE but also to a steel casing.

Mn: 0.5 to 3.0% by mass, preferably 0.8 to 2.5% by mass

Mn functions as a deoxidizer and improves the strength and toughness of a weld metal. When a Mn content is less than 0.5% by mass percentage to the total mass of a wire, the effect of improving the strength and toughness of a weld metal cannot be obtained. When a Mn content exceeds 3.0% by mass, the strength of a weld metal increases excessively, cracking resistance deteriorates, and the toughness of a weld metal is also adversely affected. For those reasons, a Mn content is set at 0.5 to 3.0% by mass, and preferably 0.8 to 2.5% by mass. Here, as a method of adding Mn to a wire, there are two methods; one is the method of adding Mn as metallic Mn or Mn alloy such as Fe-Mn to flux and the other is the method of adding Mn as a Mn component to a steel casing, and both of the methods may be adopted.

Si: 0.2 to 1.00% by mass, preferably 0.25 to 0.80% by mass

Si functions as a deoxidizer but, if added excessively, influences the structure of a weld metal and lowers the toughness of the weld metal. When a Si content exceeds 1.00% by mass percentage to the total mass of a wire, the toughness of a weld metal deteriorates. On the other hand, when a Si content is less than 0.2% by mass, blowholes tend to appear due to insufficient deoxidization. For those reasons, a Si content is set at 0.2 to 1.00% by mass, and preferably 0.25 to 0.80% by mass. Here, in the present invention, there are two methods of adding Si; one is the method of adding Si as Si alloy such as Fe-Si, Fe-Si-Mn, or the like to flux and the other is the method of adding Si as a Si component to a steel casing, and both of the methods may be adopted.

Ni: 3.00% or less by mass

Ni has the effect of improving the toughness of a weld metal but, when it is added excessively, high temperature cracking tends to occur. For that reason, when Ni is added, it is necessary to regulate a Ni content to 3.00% or less by mass percentage to the total mass of a wire. Here, in the present invention, Ni may be added not only to flux as metallic Ni but also to a steel casing as a Ni component, and both of them may be adopted.

Cr: 2.50% or less by mass

Cr has the effect of improving the strength of a weld metal but, when it is added excessively, the strength of a weld metal increases excessively and cracking resistance deteriorates. For that reason, when Cr is added, it is necessary to regulate a Cr content to 2.50% or less by mass percentage to the total mass of a wire. Here, in the present invention, Cr may be added not only to flux as metallic Cr but also to a steel casing as a Cr component, and both of them may be adopted.

Mo: 2.00% or less by mass

Mo has the effect of improving the strength of a weld metal but, when it is added excessively, the strength of a weld metal increases excessively and cracking resistance deteriorates. For that reason, when Mo is added, it is necessary to regulate a Mo content to 2.00% or less by mass percentage to the total mass of a wire. Here, in the present invention, there are two methods of adding Mo; one is the method of adding Mo as metallic Mo or alloy such as Mo-C, or the like to flux and the other is the method of adding Mo as a Mo component to a steel casing, and both of the methods may be adopted.

Al: 1.00% or less by mass

Al has the effects of increasing the viscosity of molten metal at welding, improving vertical up hand weldability, and improving also welding operability. However, when Al is added excessively, the conformity of a bead at down hand welding deteriorates and toughness also deteriorates. For that reason, when Al is added, it is necessary to regulate an Al content to 1.00% or less by mass percentage to the total mass of a wire. Here, in the present invention, there are two methods of adding Al; one is the method of adding Al as metallic Al or alloy such as Al-Mg, or the like to flux and the other is the method of adding Al as an Al component to a steel casing, and both of the methods may be adopted.

Here, the aforementioned components may be added in the ranges stipulated above not only to a steel casing as the steel components but also to flux as the metallic components. That is, the aforementioned components are added as metals (including alloys thereof) also when they are added to flux. In contrast, the components stated below are those added as slag formers or deoxidizers.

Al$_2$O$_3$: 1.00% or less by mass

Al$_2$O$_3$ functions as a slag former. However, when Al$_2$O$_3$ exceeds 1.00% by mass percentage to the total mass of a wire, the conformity of a bead deteriorates at down hand welding and welding operability also deteriorates. For that reason, Al$_2$O$_3$ is set at 1.00% or less by mass when it is added. A preferable addition amount of Al$_2$O$_3$ is 0.05% or more by mass. Then a preferable upper limit of Al$_2$O$_3$ is 0.80% by mass. Here, as an Al$_2$O$_3$ source, alumina or the like is cited.

SiO$_2$: 1.00% or less by mass

SiO$_2$ functions as a slag former. However, when SiO$_2$ exceeds 1.00% by mass percentage to the total mass of a wire, a bead at vertical welding takes a convex form. For that reason, SiO$_2$ is set at 1.00% or less by mass when it is added. A preferable addition amount of SiO$_2$ is 0.15% or more by mass. Then a preferable upper limit of SiO$_2$ is 0.80% by mass. Here, as an SiO$_2$ source, silica, potassium glass, soda glass, or the like is cited.

ZrO$_2$: 0.80% or less by mass

ZrO$_2$ functions as a slag former. However, when ZrO$_2$ exceeds 0.80% by mass percentage to the total mass of a wire, a bead at vertical welding takes a convex form. For that reason, ZrO$_2$ is set at 0.80% or less by mass when it is added. A preferable addition amount of ZrO$_2$ is 0.05% or more by mass. Then a preferable upper limit of ZrO$_2$ is 0.7% by mass. Here, as a ZrO$_2$ source, zircon sand, zirconia, or the like is cited.

Mg: 1.5% or less by mass

Mg functions as a deoxidizer. However, when Mg exceeds 1.5% by mass percentage to the total mass of a wire, welding operability deteriorates. For that reason, Mg is set at 1.5% or less by mass when it is added. A preferable addition amount of Mg is 0.2% or more by mass. Then a preferable upper limit of Mg is 0.9% by mass. Here, as a Mg source, metallic Mg, Ni-Mg alloy, or the like is cited.

Fe: 85 to 95% by mass

In a wire for gas shielded arc welding according to the present invention, the balance is Fe and unavoidable impurities. In a flux-cored wire for all position welding, when a Fe content is less than 85% by mass percentage to the total mass of the wire, the amount of generated slag is excessive and hence weld defects such as slag inclusions are likely to occur. When a Fe content exceeds 95% by mass, essential alloy components cannot be added. Here, in the present invention, as a Fe source, besides a steel casing, iron powder or Fe alloy may be added to flux.
Fe is supplied from a steel casing, iron powder in flux, and iron alloy such as Fe-Mn, Fe-Si, and the like in flux. Then unavoidable impurities are contained in the steel casing and the added materials. The unavoidable impurities are P, S, Cu, V, Nb, Zr, Co, and Sn. The unavoidable impurities in a wire are regulated to, by mass percentage to the total mass of the wire, P: 0.03% or less, S: 0.03% or less, Cu: 0.3% or less (including Cu plating on the wire surface), V: 0.05% or less, Nb: 0.05% or less, Zr: 0.01% or less, Co: 0.01% or less, and Sn: 0.02% or less. Further, if necessary, alloying elements besides the above components, an arc stabilizer, and others may also be added.
In the stipulation of the components of a flux-cored wire according to the present invention, with regard to a certain metallic element, a content as metal is distinguished from a content as a chemical compound. With regard to Al for example, Al cited in the aforementioned term "A1: 1.00% or less by mass" does not include Al existing as a chemical compound thereof such as Al$_2$O$_3$.
The diameter of a flux-cored wire according to the present invention is in the range of 1.0 to 2.0 mm. A preferable range thereof is 1.2 to 1.6 mm in practical use. Further, a preferable filling factor of flux is 10 to 25% by mass.

[Examples]

Examples of flux-cored wires for gas shielded arc welding according to the present invention are hereunder explained concretely while comparing the characteristics thereof with those of comparative examples.
Steel casings having the compositions shown in Table 1 below were filled with flux of by mass and flux-cored wires (1.2 mm in diameter) for gas shielded arc welding having the compositions shown in Tables 4 and 5 below were produced.

[Table 1]

| Steel casing No. | C | Mn | Si | P | S | Ni | Cr | Mo | Balance |
|---|---|---|---|---|---|---|---|---|---|
| A | 0.050 | 0.30 | 0.06 | 0.01 | 0.01 | 0.01 | 0.02 | 0.02 | Fe and unavoidable impurities |
| B | 0.004 | 0.45 | 0.15 | 0.01 | 0.02 | 1.80 | 1.20 | 0.30 | Fe and unavoidable impurities |

[Table 2]

| Welding conditions at diffusible hydrogen measurement | |
|---|---|
| Electric current | 280A |
| Voltage | 30V |
| Welding speed | 30cm/min. |
| Distance between tip and base material | 20mm |
| Shielding gas | 80%Ar-20%$CO_2$ |

[Table 3]

| Test conditions of current stability during welding (evaluation of welding operability) | |
|---|---|
| Electric current | 250A |
| Voltage | 28V |
| Welding speed | 30cm/min. |
| Distance between tip and base material | 20mm |
| Shielding gas | 80%Ar-20%$CO_2$ |
| Sampling rate | 2msec. |
| Sampling time | 120sec. |

[Table 4]

| Steel casing No. | | | Components in wire (mass %) | | | | | | | | | | | | |
|---|---|---|---|---|---|---|---|---|---|---|---|---|---|---|---|
| | | | Fe | C | Si | Mn | Ni | Cr | Mo | Mg | Al | $SiO_2$ | $Al_2O_3$ | $ZrO_2$ | Titanium dioxide |
| Example | 1 | A | 91 | 0.076 | 0.48 | 1.33 | 0.10 | 0.16 | 0.02 | 1.0 | 0.02 | 0.31 | 0.13 | 0.43 | 4.2 |
| | 2 | A | 87 | 0.060 | 0.30 | 2.40 | 2.15 | 0.15 | 0.18 | 1.2 | 0.20 | 0.33 | 0.20 | 0.21 | 5.0 |
| | 3 | A | 88 | 0.085 | 0.80 | 0.79 | 0.02 | 0.13 | 0.30 | 0.8 | 0.13 | 0.28 | 0.78 | 0.45 | 6.8 |
| | 4 | A | 90 | 0.139 | 0.32 | 0.92 | 0.86 | 0.32 | 0.18 | 0.7 | 0.11 | 0.25 | 0.15 | 0.52 | 4.6 |
| | 5 | A | 87 | 0.110 | 0.47 | 1.23 | 2.92 | 0.28 | 0.19 | 0.1 | 0.04 | 0.49 | 0.08 | 0.61 | 5.6 |
| | 6 | A | 86 | 0.139 | 0.42 | 1.54 | 2.50 | 0.19 | 0.19 | 0.4 | 0.03 | 0.47 | 0.75 | 0.61 | 5.4 |
| | 7 | A | 86 | 0.142 | 0.22 | 2.50 | 0.11 | 0.03 | 0.13 | 1.1 | 0.00 | 0.71 | 0.06 | 0.44 | 7.8 |
| | 8 | A | 86 | 0.163 | 0.33 | 1.33 | 1.22 | 0.37 | 0.40 | 0.5 | 0.17 | 0.44 | 0.33 | 0.50 | 6.8 |
| | 9 | A | 87 | 0.139 | 0.43 | 0.89 | 1.34 | 0.80 | 0.10 | 0.7 | 0.61 | 0.37 | 0.35 | 0.48 | 5.4 |
| | 10 | A | 86 | 0.142 | 0.23 | 1.50 | 0.30 | 0.23 | 0.18 | 1.3 | 0.79 | 0.25 | 0.30 | 0.47 | 7.0 |
| | 11 | B | 86 | 0.025 | 0.70 | 0.80 | 2.93 | 1.24 | 0.38 | 0.9 | 0.01 | 0.50 | 0.75 | 0.31 | 5.2 |
| | 12 | B | 85 | 0.053 | 0.22 | 0.62 | 2.43 | 1.89 | 0.54 | 0.7 | 0.02 | 0.22 | 0.12 | 0.54 | 6.9 |
| | 13 | B | 86 | 0.028 | 0.26 | 0.92 | 2.40 | 1.98 | 0.66 | 1.0 | 0.03 | 0.34 | 0.77 | 0.51 | 4.1 |
| | 14 | B | 85 | 0.018 | 0.38 | 1.58 | 1.88 | 1.12 | 0.31 | 0.8 | 0.08 | 0.49 | 0.25 | 0.48 | 7.4 |

| Steel casing No. | | | Components in wire (mass %) | | | | | | | | | | | | |
|---|---|---|---|---|---|---|---|---|---|---|---|---|---|---|---|
| | | | Fe | C | Si | Mn | Ni | Cr | Mo | Mg | Al | $SiO_2$ | $Al_2O_3$ | $ZrO_2$ | Titanium dioxide |
| Comparative example | 15 | A | 90 | 0.101 | 0.33 | 1.33 | 0.83 | 0.28 | 0.12 | 0.9 | 0.05 | 0.38 | 0.68 | 0.40 | 3.6 |
| | 16 | A | 87 | 0.163 | 0.23 | 0.81 | 1.85 | 0.44 | 0.14 | 1.0 | 0.22 | 0.51 | 0.12 | 0.33 | 6.4 |
| | 17 | A | 86 | 0.132 | 0.67 | 1.50 | 0.04 | 0.43 | 0.05 | 0.3 | 0.28 | 0.30 | 0.04 | 0.34 | 8.4 |
| | 18 | A | 87 | 0.053 | 0.50 | 1.68 | 2.95 | 0.23 | 0.21 | 0.6 | 0.62 | 0.27 | 0.67 | 0.39 | 3.6 |
| | 19 | A | 87 | 0.113 | 0.20 | 1.40 | 1.33 | 0.04 | 0.20 | 0.5 | 0.10 | 0.55 | 0.35 | 0.65 | 6.1 |
| | 20 | A | 89 | 0.047 | 0.25 | 1.58 | 0.41 | 0.21 | 0.22 | 0.2 | 0.02 | 0.48 | 0.30 | 0.66 | 6.2 |
| | 21 | A | 86 | 0.101 | 0.24 | 1.01 | 0.44 | 0.20 | 0.22 | 1.1 | 0.25 | 0.30 | 0.22 | 0.31 | 5.1 |
| | 22 | A | 87 | 0.142 | 0.52 | 0.76 | 0.58 | 0.34 | 0.41 | 0.3 | 0.41 | 0.41 | 0.10 | 0.11 | 4.8 |
| | 23 | A | 90 | 0.060 | 0.24 | 1.58 | 0.85 | 0.23 | 0.20 | 0.4 | 0.09 | 0.31 | 0.06 | 0.60 | 5.0 |
| | 24 | B | 87 | 0.006 | 0.26 | 0.92 | 1.87 | 1.59 | 0.48 | 0.7 | 0.27 | 0.50 | 0.45 | 0.40 | 5.2 |
| | 25 | B | 85 | 0.066 | 0.31 | 0.78 | 2.21 | 1.22 | 0.30 | 0.9 | 0.51 | 0.66 | 0.76 | 0.23 | 6.2 |
| | 26 | B | 85 | 0.132 | 0.21 | 2.40 | 2.00 | 2.23 | 0.51 | 0.4 | 0.55 | 0.19 | 0.21 | 0.54 | 4.6 |
| | 27 | B | 87 | 0.145 | 0.22 | 0.99 | 2.21 | 1.34 | 0.47 | 0.5 | 0.04 | 0.22 | 0.34 | 0.66 | 5.2 |
| | 28 | B | 85 | 0.047 | 0.30 | 0.51 | 1.60 | 1.22 | 0.42 | 0.7 | 0.00 | 0.28 | 0.70 | 0.61 | 8.1 |

[Table 5]

| Steel casing No. | | | Fluorine equivalence in wire (mass %) | | | Expression 1 | Expression 2 | Wire moisture (ppm) | Diffusible hydrogen (ml/100g) | Current fluctuation width (A) | Vertical up hand welding |
|---|---|---|---|---|---|---|---|---|---|---|---|
| | | | Alkali metal fluoride | PTFE | Alkali-earth metal fluoride | | | | | | |
| Example | 1 | A | 0.03 | 0.10 | 0.009 | 0.30 | 3.80 | 351 | 4.2 | 296 | OK |
| | 2 | A | 0.04 | 0.05 | 0.005 | 0.80 | 7.80 | 411 | 4.8 | 289 | OK |
| | 3 | A | 0.10 | 0.13 | 0.010 | 0.77 | 3.46 | 432 | 4.2 | 300 | OK |
| | 4 | A | 0.16 | 0.30 | 0.004 | 0.53 | 1.70 | 270 | 1.9 | 318 | OK |
| | 5 | A | 0.18 | 0.21 | 0.003 | 0.86 | 2.52 | 321 | 3.1 | 298 | OK |
| | 6 | A | 0.21 | 0.30 | 0.001 | 0.70 | 1.87 | 289 | 2.6 | 304 | OK |
| | 7 | A | 0.03 | 0.31 | 0.006 | 0.10 | 1.23 | 298 | 3.0 | 321 | OK |
| | 8 | A | 0.19 | 0.30 | 0.003 | 0.63 | 1.80 | 303 | 3.6 | 336 | OK |
| | 9 | A | 0.13 | 0.30 | 0.004 | 0.43 | 1.60 | 278 | 2.4 | 305 | OK |
| | 10 | A | 0.06 | 0.31 | 0.002 | 0.19 | 1.32 | 290 | 2.9 | 331 | OK |
| | 11 | B | 0.03 | 0.05 | 0.002 | 0.60 | 7.60 | 412 | 4.7 | 278 | OK |
| | 12 | B | 0.10 | 0.14 | 0.004 | 0.71 | 3.21 | 332 | 3.3 | 286 | OK |
| | 13 | B | 0.05 | 0.06 | 0.002 | 0.83 | 6.67 | 380 | 3.9 | 276 | OK |
| | 14 | B | 0.02 | 0.03 | 0.002 | 0.67 | 12.33 | 461 | 4.9 | 275 | OK |

(continued)

| Steel casing No. | | | Fluorine equivalence in wire (mass %) | | | Expression 1 | Expression 2 | Wire moisture (ppm) | Diffusible hydrogen (ml/100g) | Current fluctuation width (A) | Vertical up hand welding |
|---|---|---|---|---|---|---|---|---|---|---|---|
| | | | Alkali metal fluoride | PTFE | Alkali-earth metal fluoride | | | | | | |
| Comparative example | 15 | A | 0.01 | 0.18 | 0.002 | 0.06 | 2.00 | 284 | 2.6 | 380 | NG |
| | 16 | A | 0.02 | 0.38 | 0.002 | 0.05 | 0.97 | 251 | 4.2 | 412 | OK |
| | 17 | A | 0.50 | 0.28 | 0.003 | 1.79 | 3.04 | 706 | 6.8 | 303 | OK |
| | 18 | A | 0.40 | 0.03 | 0.002 | 13.33 | 25.00 | 551 | 5.3 | 219 | NG |
| | 19 | A | 0.22 | 0.22 | 0.030 | 1.00 | 2.59 | 534 | 5.1 | 300 | OK |
| | 20 | A | 0.20 | 0.01 | 0.002 | 20.00 | 55.00 | 560 | 7.1 | 271 | OK |
| | 21 | A | 0.22 | 0.18 | 0.005 | 1.22 | 3.17 | 521 | 5.3 | 331 | OK |
| | 22 | A | 0.35 | 0.31 | 0.002 | 1.13 | 2.26 | 512 | 5.3 | 310 | OK |
| | 23 | A | 0.13 | 0.05 | 0.003 | 2.60 | 9.60 | 556 | 6.4 | 279 | OK |
| | 24 | B | 0.05 | 0.01 | 0.002 | 5.00 | 40.00 | 523 | 5.2 | 284 | OK |
| | 25 | B | 0.52 | 0.20 | 0.041 | 2.60 | 4.35 | 701 | 6.8 | 298 | OK |
| | 26 | B | 0.05 | 0.41 | 0.002 | 0.12 | 0.98 | 255 | 2.1 | 445 | OK |
| | 27 | B | 0.35 | 0.45 | 0.001 | 0.78 | 1.56 | 266 | 3.4 | 388 | OK |
| | 28 | B | 0.12 | 0.14 | 0.001 | 0.86 | 3.36 | 521 | 5.1 | 322 | OK |

Performance confirmation tests shown below were carried out using the produced flux-cored wires.

(1) Diffusible hydrogen test

In the diffusible hydrogen tests, welding was carried out with the produced flux-cored welding wires under the welding conditions shown in Table 2, and the amount of diffusible hydrogen at each weld was measured in conformity with the method of measuring hydrogen in a steel weld stipulated in JIS Z3118. The results are shown in Table 5. A case where the amount of diffusible hydrogen was 5 ml/100g or less was defined as acceptable.

(2) K. F. (Karl Fischer) moisture measurement test

With regard to the produced flux-cored wires, the amount of moisture of each produced wire as it was and the amount of moisture of a relevant wire which was dried for one hour at 110°C and thereafter retained for 48 hours at 30°C in the atmosphere of 80% relative humidity (moisture absorption treatment) were measured in an Ar atmosphere of 750°C by the KF (Karl Fischer) method (conforming to JIS K0068). The results are shown in Table 5. A case where the moisture after moisture absorption treatment was 500 ppm or less was defined as acceptable.

(3) Stability of electric current at welding (welding operability)

As the test of the stability of electric current during welding (welding operability), welding was carried out with the produced flux-cored wires under the welding conditions shown in Table 3. The fluctuation of the electric current during the welding was recorded and the fluctuation widths of the electric current and the voltage were regarded as the stability of electric current and used as the judgment criterion of welding operability. The results are shown in Table 5. A case where the fluctuation width of electric current was 350A or less was defined as acceptable.

As shown in Table 5 above, Example Nos. 1 to 14 were the cases of satisfying the ranges stipulated in the present invention and, in any of the cases, good results were obtained in diffusible hydrogen reduction effect, resistance to hygroscopicity, and welding operability. Here, in the case of Example No. 8, although the conditions stipulated in a first aspect according to the present invention were satisfied, the condition stipulated in a second aspect was not satisfied and hence the fluctuation width of the electric current was relatively large. Further, in the cases of Example Nos. 7 and 10, although the conditions stipulated in the first and second aspects were satisfied, the condition stipulated in a third aspect was not satisfied and hence the fluctuation width of the electric current was smaller than that in the case of Example No. 8 but was relatively large. On the other hand, as shown in Table 5, the cases of Comparative example Nos. 15 to 28 had following problems.

In the case of Comparative example No. 15, the content of alkali metal fluoride was less than the lower limit thereof stipulated in the first aspect and hence the fluctuation width of electric current was large and the effect of improving welding operability was not obtained. In the cases of Comparative example Nos. 15 and 18, the contents of titanium dioxide were less than the lower limit thereof stipulated in the first aspect and hence vertical up hand welding was not successful. In the cases of Comparative example Nos. 17 and 28, the contents of titanium dioxide exceeded the upper limit thereof stipulated in the first aspect and hence the moisture amounts of the wires after moisture absorption were large and the diffusible hydrogen amounts were also large. In the cases of Comparative example Nos. 16 and 26, the expression 2 stipulated in the first aspect was not satisfied and hence the fluctuation widths of electric current were large and the welding operability was poor. In the cases of Comparative example Nos. 17, 18, and 20 to 25, the expression 1 stipulated in the first aspect was not satisfied and hence the moisture amounts of the wires after moisture absorption were large and the diffusible hydrogen amounts were also large. In the cases of Comparative example Nos. 20 and 24, the contents of PTFE were less than the lower limit thereof stipulated in the first aspect and the expression 1 stipulated in the first aspect was not satisfied and hence the moisture amounts of the wires after moisture absorption were large and the diffusible hydrogen amounts were also large. In the cases of Comparative example Nos. 17 and 25, the contents of alkali metal fluoride exceeded the upper limit thereof stipulated in the first aspect and the expression 1 stipulated in the first aspect was not satisfied and hence the moisture amounts of the wires after moisture absorption were large and the diffusible hydrogen amounts were also large. In the cases of Comparative example Nos. 26 and 27, the contents of PTFE exceeded the upper limit thereof stipulated in the first aspect and hence the fluctuation widths of electric current were large and the welding operability was poor. In the cases of Comparative example Nos. 19 and 25, the contents of alkali-earth metal fluoride exceeded the upper limit thereof stipulated in the first aspect and hence the moisture amounts of the wires after moisture absorption were large and the diffusible hydrogen amounts were also large.

**Claims**

1.  A flux-cored wire for gas shielded arc welding formed by filling a steel casing with flux, wherein:

    said flux contains, by mass percentage to the total mass of the wire, titanium dioxide: 4.0 to 8.0%, alkali metal fluoride (fluorine equivalence): 0.02 to 0.40%, and polytetrafluoroethylene (fluorine equivalence): 0.02 to 0.40%; the fluorine equivalence of alkali-earth metal fluoride in said flux is regulated to 0.01% or less by mass percentage to the total mass of the wire; and
    the fluorine equivalence of alkali metal fluoride in said flux by mass percentage to the total mass of the wire and the fluorine equivalence of polytetrafluoroethylene in said flux by mass percentage to the total mass of the wire satisfy both the following expressions;

$$\text{(fluorine equivalence of alkali metal fluoride)} / \text{(fluorine equivalence of polytetrafluoroethylene)} \le 1,$$

    and

$$\text{(fluorine equivalence of alkali metal fluoride} + 0.35) / \text{(fluorine equivalence of polytetrafluoroethylene)} \ge 1.$$

2.  A flux-cored wire for gas shielded arc welding according to claim 1, wherein at least one of said steel casing and said flux contains C: 0.007 to 0.15% by mass percentage to the total mass of the wire.

3.  A flux-cored wire for gas shielded arc welding according to claim 2, wherein at least one of said steel casing and said flux contains C: 0.01 to 0.12% by mass percentage to the total mass of the wire.

4.  A flux-cored wire for gas shielded arc welding according to anyone of claims 1 to 3, wherein at least one of said steel casing and said flux contains Mn: 0.5 to 3.0% and Si: 0.2 to 1.00% by mass percentage to the total mass of the wire.

5.  A flux-cored wire for gas shielded arc welding according to anyone of claims 1 to 4, wherein said flux contains $Al_2O_3$: 0.05 to 1.00%, $SiO_2$: 0.15 to 1.00%, and $ZrO_2$: 0.05 to 0.80% by mass percentage to the total mass of the wire.

6.  A flux-cored wire for gas shielded arc welding according to anyone of claims 1 to 5, wherein at least one of said steel casing and said flux contains Mg: 0.2 to 1.5% by mass percentage to the total mass of the wire.

7.  A flux-cored wire for gas shielded arc welding according to anyone of claims 1 to 6, wherein at least one of said steel casing and said flux contains Ni: 3.00% or less, Cr: 2.50% or less, and Mo: 2.00% or less by mass percentage to the total mass of the wire.


**Patentansprüche**

1.  Flussmittelkerndraht zum Schutzgaslichtbogenschweissen, gebildet durch das Füllen eines Stahlmantelrohrs bzw. einer Stahlumhüllung mit Flussmittel bzw. Lötmittel, wobei
    das Flussmittel, in Masse-%, bezogen auf die Gesamtmasse des Drahtes, 4,0 bis 8,0% Titandioxid, 0,02 bis 0,40% Alkalimetallfluorid (Fluoräquivalent), und 0,02 bis 0,40% Polytetrafluorethylen (Fluoräquivalent) enthält,
    das Fluoräquivalent von Erdalkalimetallfluorid in dem Flussmittel auf 0,01% oder weniger, in Masse-%, bezogen auf die Gesamtmasse des Drahtes, eingestellt ist, und
    das Fluoräquivalent von Alkalimetallfluorid in dem Flussmittel, in Masse-%, bezogen auf die Gesamtmasse des Drahtes, und das Fluoräquivalent von Polytetrafluorethylen in dem Flussmittel, in Masse-%, bezogen auf die Gesamtmasse des Drahtes, beide den folgenden Ausdrücken genügen:

(Fluoräquivalent von Alkalimetallfluorid) / (Fluoräquivalent von Polytetrafluor-ethylen) ≤ 1,

und

(Fluoräquivalent von Alkalimetallfluorid + 0,35) / (Fluoräquivalent von Poly-tetrafluorethylen) ≥ 1.

2. Flussmittelkerndraht zum Schutzgaslichtbogenschweissen nach Anspruch 1, wobei mindestens eines von dem Stahlmantelrohr und dem Flussmittel 0,007 bis 0,15% C, in Masse-%, bezogen auf die Gesamtmasse des Drahtes, enthält.

3. Flussmittelkerndraht zum Schutzgaslichtbogenschweissen nach Anspruch 2, wobei mindestens eines von dem Stahlmantelrohr und dem Flussmittel 0,01 bis 0,12% C, in Masse-%, bezogen auf die Gesamtmasse des Drahtes, enthält.

4. Flussmittelkerndraht zum Schutzgaslichtbogenschweissen nach einem der Ansprüche 1 bis 3, wobei mindestens eines von dem Stahlmantelrohr und dem Flussmittel 0,5 bis 3,0% Mn und 0,2 bis 1,00% Si, in Masse-%, bezogen auf die Gesamtmasse des Drahtes, enthält.

5. Flussmittelkerndraht zum Schutzgaslichtbogenschweissen nach einem der Ansprüche 1 bis 4, wobei das Flussmittel 0,05 bis 1,00% $Al_2O_3$, 0,15 bis 1,00% $SiO_2$ und 0,05 bis 0,80% $ZrO_2$, in Masse-%, bezogen auf die Gesamtmasse des Drahtes, enthält.

6. Flussmittelkerndraht zum Schutzgaslichtbogenschweissen nach einem der Ansprüche 1 bis 5, wobei mindestens eines von dem Stahlmantelrohr und dem Flussmittel 0,2 bis 1,5% Mg, in Masse-%, bezogen auf die Gesamtmasse des Drahtes, enthält.

7. Flussmittelkerndraht zum Schutzgaslichtbogenschweissen nach einem der Ansprüche 1 bis 6, wobei mindestens eines von dem Stahlmantelrohr und dem Flussmittel 3,00% oder weniger Ni, 2,50% oder weniger Cr und 2,00% oder weniger Mo, in Masse-%, bezogen auf die Gesamtmasse des Drahtes, enthält.

**Revendications**

1. Fil à flux incorporé pour le soudage à l'arc sous protection gazeuse formé en remplissant une enveloppe en acier avec un flux, dans lequel :

ledit flux contient, en pourcentage en masse de la masse totale du fil, du dioxyde de titane : de 4,0 à 8,0 %, du fluorure de métal alcalin (équivalent en fluor) : de 0,02 à 0,40 %, et du polytétrafluoroéthylène (équivalent en fluor) : de 0,02 à 0,40 ;
l'équivalent en fluor du fluorure de métal alcalino-terreux dans ledit flux est régulé à 0,01 % ou moins en pourcentage en masse de la masse totale du fil ; et
l'équivalent en fluor du fluorure de métal alcalin dans ledit flux en pourcentage en masse de la masse totale du fil et l'équivalent en fluor du polytétrafluoroéthylène dans ledit flux en pourcentage en masse de la masse totale du fil satisfont les deux expressions suivantes ;

(équivalent en fluor du fluorure de métal alcalin)/(équivalent en fluor du polytétrafluoroéthylène) ≤ 1,

et

(équivalent en fluor du fluorure de métal alcalin + 0,35)/( équivalent en fluor du polytétrafluoroéthylène) ≥ 1.

**2.** Fil à flux incorporé pour le soudage à l'arc sous protection gazeuse selon la revendication 1, dans lequel au moins l'un de ladite enveloppe en acier et dudit flux contient C : de 0,007 à 0,15 % en pourcentage en masse de la masse totale du fil.

**3.** Fil à flux incorporé pour le soudage à l'arc sous protection gazeuse selon la revendication 2, dans lequel au moins l'un de ladite enveloppe en acier et dudit flux contient C : de 0,01 à 0,12 % en pourcentage en masse de la masse totale du fil.

**4.** Fil à flux incorporé pour le soudage à l'arc sous protection gazeuse selon l'une quelconque des revendications 1 à 3, dans lequel au moins l'un de ladite enveloppe en acier et dudit flux contient Mn : de 0,5 à 3,0 % et Si : de 0,2 à 1,00 % en pourcentage en masse de la masse totale du fil.

**5.** Fil à flux incorporé pour le soudage à l'arc sous protection gazeuse selon l'une quelconque des revendications 1 à 4, dans lequel ledit flux contient $Al_2O_3$ : de 0,05 à 1,00 %, $SiO_2$ : de 0,15 à 1,00 %, et $ZrO_2$ : de 0,05 à 0,80% en pourcentage en masse de la masse totale du fil.

**6.** Fil à flux incorporé pour le soudage à l'arc sous protection gazeuse selon l'une quelconque des revendications 1 à 5, dans lequel au moins l'un de ladite enveloppe en acier et dudit flux contient Mn : de 0,2 à 1,5 % en pourcentage en masse de la masse totale du fil.

**7.** Fil à flux incorporé pour le soudage à l'arc sous protection gazeuse selon l'une quelconque des revendications 1 à 6, dans lequel dans lequel au moins l'un de ladite enveloppe en acier et dudit flux contient Ni : 3,00 % ou moins, Cr : 2,50 % ou moins, et Mo : 2,00 % ou moins en pourcentage en masse de la masse totale du fil.

# FIG.1

FLUORINE EQUIVALENCE OF ALKALI METAL FLUORIDE TO THE TOTAL MASS OF A WIRE (MASS%)

FLUORINE EQUIVALENCE OF PTFE TO THE TOTAL MASS OF A WIRE (MASS%)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7110432 B
- EP 595337 A
- JP 2002224883 A